# EUROPÄISCHE PATENTANMELDUNG

(11) **EP 1 020 316 A1**
(43) Veröffentlichungstag der Anmeldung: **19.07.2000**
(21) Anmeldenummer: 99123465.9
(22) Anmeldetag: 25.11.1999
(51) Int. Cl.: B60K 31/04

(54) **Verfahren zum Regeln der Geschwindigkeit eines Kraftfahrzeuges**

(30) Priorität: 16.01.1999 DE 19901527
(71) Anmelder: Dr.Ing. h.c.F. Porsche Aktiengesellschaft, 70435 Stuttgart (DE)
(72) Erfinder: Roulet, Tobias, 71229 Leonberg (DE)

(57) **Zusammenfassung**

Verfahren zum Regeln der Geschwindigkeit eines Kraftfahrzeuges, wobei die Fahrzeuggeschwindigkeit auf eine vorgebbare Sollgeschwindigkeit (vₛₒₗₗ) geregelt wird. Wird vom Fahrer ein Geschwindigkeitsänderung eingeleitet, so wird der Regelvorgang außer Kraft gesetzt und nach dem Beenden der Geschwindigkeitsänderung eine neue Sollgeschwindigkeit (vₛₒₗₗ₋ₙₑᵤ) als Regelgröße erfaßt, wobei der Betrag der aktuellen Beschleunigung (|aₐₖₜ|) mit dem Betrag einer vorgebbaren Referenzbeschleunigung (|aₐₖₜ| < |a_{ref}|) verglichen wird und wobei die Momentangeschwindigkeit zum dem Zeitpunkt, wenn der Betrag der aktuellen Beschleunigung (|aₐₖₜ|) kleiner ode gleich dem Betrag der vorgebbaren Referenzbeschleunigung (|a_{ref}|) als neue Sollgeschwindigkeit (vₛₒₗₗ₋ₙₑᵤ) abgespeichert wird, die betriebspunktabhängig korrigiert werden kann.

## Beschreibung

Die vorliegende Erfindung betrifft ein Verfahren zum Regeln der Geschwindigkeit eines Kraftfahrzeuges.

In modernen Fahrzeugen werden zur Komforterhöhung für den Fahrer zunehmend Fahrgeschwindigkeitsregler eingesetzt, welche sicherstellen, daß das Fahrzeug eine vorgebbare Soll-Geschwindigkeit ohne ein weiteres Einwirken vom Fahrer beibehält. Die Soll-Geschwindigkeit kann hierbei beispielsweise auf geraden Strecken verbrauchsoptimiert oder in Abhängigkeit von Geschwindigkeitsbegrenzungen eingestellt werden.

Aus der DE-OS 2842023 ist ein Fahrgeschwindigkeitsregler bekannt, welcher über eine Auswertung von Soll- und Istgeschwindigkeit die gewünschte Fahrgeschwindigkeit durch Beeinflussung der Motorleistung einstellt. Dabei ist in dynamischen Betriebszuständen wie Beschleunigen oder Verzögern eine zeitlich veränderliche Sollgeschwindigkeit vorgesehen, die das Fahrzeug mit einer vorgegebenen Beschleunigung bzw. Verzögerung auf den gewünschten bzw. eingespeicherten Sollwert führt.

Aus der DE 196 27 727 A1 ist ebenfalls ein Verfahren zur Steuerung der Geschwindigkeit eines Fahrzeuges bekannt, bei welchem die Fahrzeuggeschwindigkeit nach Maßgabe einer vom Fahrer vorgegebenen Soll- und der Istgeschwindigkeit gesteuert wird. Nach dem Abschalten der Regelung kann der Fahrer die Regelung mit der ursprünglich eingespeicherten Sollgeschwindigkeit wieder aufnehmen, wobei in wenigstens einer Betriebssituation die Wiederaufnahme der ursprünglichen Sollgeschwindigkeit verzögert wird. Mit dieser bekannten Lösung wird sichergestellt, daß der Fahrer und der nachfolgende Verkehr nicht durch unmotivierte Verzögerungsvorgänge irritiert wird, was insbesondere bei Geschwindigkeitsregelungen mit Bremseingriff, wie im adaptiven Fahrgeschwindigkeitsregler oftmals realisiert, zu erheblichen Komforteinbußen führt.

Bei den bekannten Geschwindigkeitssteuerungen ist es möglich, daß in einem Betriebszustand vorzugsweise bei Verzögerung oder Beschleunigung der Geschwindigkeitsregler zeitweise abgeschaltet ist und sich das Fahrzeug mit einer wesentlich höheren Geschwindigkeit bewegt, als dies beim vorhergehenden Regelbetrieb realisiert war. Möchte der Fahrer nach dem Beschleunigungsvorgang oder einem möglichen Verzögerungsvorgang das Fahrzeug mit der neuen erreichten Geschwindigkeit fahren, so muß er diese Geschwindigkeit neu in dem Fahrgeschwindigkeitsregler einspeichern.

Durch das erfindungsgemäße Verfahren wird sichergestellt, daß eine neue Sollgeschwindigkeit ohne zusätzlichen Programmierungsaufwand für den Fahrer vom Steuergerät selbsttätig erfaßt und als neue zu regelnde Zielgröße vorgegeben wird. Die Überwachung der aktuellen Beschleunigung in der Art, daß ein Vergleich des Betrages der aktuellen Beschleunigung mit dem Betrag einer Referenzbeschleunigung für das Erkennen der Beendigung des Vorganges der Geschwindigkeitsänderung hat den Vorteil, daß vom Fahrer keine zusätzliche Aktion notwendig ist. Das Steuergerät erkennt aufgrund des Vergleiches selbsttätig den Zeitpunkt, an dem die gewünschte Geschwindigkeitsänderung beendet ist und speichert die Momentangeschwindigkeit als neue Sollgeschwindigkeit.

Durch die in den Unteransprüchen aufgeführten Merkmale sind weitere vorteilhafte Ausgestaltungen und Verbesserungen des erfindungsgemäßen Verfahrens gegeben.

Das Ende der Geschwindigkeitsänderung wird erkannt, wenn innerhalb einer vorgebbaren Zeit nach dem Loslassen einer Bedieneinheit für die Geschwindigkeitsänderung keine erneute Betätigung der Bedieneinheit erfolgt. Dies hat den Vorteil, daß nicht auf jede möglicherweise unbeabsichtigte Gaspedal- oder Bremspedalbewegung des Fahrers reagiert wird.

Ein weiterer Vorteil ergibt sich daraus, daß nach dem Beenden der Geschwindigkeitsänderung eine vorgebbare Zeit gestartet wird und erst nach Ablauf dieser vorgebbaren Zeit (t₁) die Momentangeschwindigkeit (vₘₒₘ) als neue Sollgeschwindigkeit (vₛₒₗₗ₋ₙₑᵤ) erfaßt wird, da so das Einschwingen des Geschwindigkeitskonstanthalters auf die neue Sollgeschwindigkeit für den Fahrer ohne erkennbares Ruckeln erfolgt und damit der Fahrkomfort deutlich erhöht ist.

Ein weiterer Vorteil ergibt sich, wenn die Momentangeschwindigkeit (vₘₒₘ) mit einer vorgebbaren vorzugsweise betriebspunktabhängigen Geschwindigkeitsdifferenz (v) beaufschlagt wird und diese adaptiv korrigierte Geschwindigkeit als neue Sollgeschwindigkeit (vₛₒₗₗ₋ₙₑᵤ) gespeichert wird, da das Fahrverhalten damit sehr gut an die aktuellen Anforderungen angepaßt wird.

Die Erfindung wird nachstehend anhand der in der Zeichnung dargestellten Ausführungsformen näher erläutert. Es zeigen Figur 1 den Prinzipaufbau einer Anordnung zur Durchführung des erfindungsgemäßen Verfahrens, Figur 2 den Ablaufplan im Steuergerät bei negativer Beschleunigung und Figur 3 den Ablaufplan im Steuergerät bei positiver Beschleunigung .

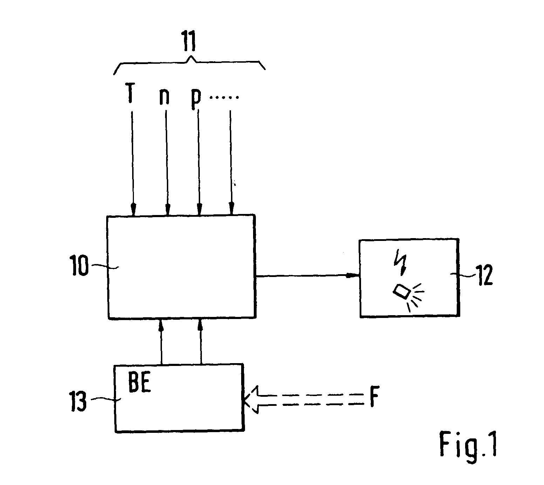

Figur 1 zeigt ein Steuergerät 10 zur Steuerung der Zünd- und Einspritzsteuervorgänge in einem Kraftfahrzeug. Solche Steuergeräte sind bereits beispielsweise mit dem Zünd- und Einspritzsteuergerät Motronic der Fa. Bosch bekannt, so daß ihr grundsätzlicher Aufbau hier nur soweit erläutert werden soll, wie es für das erfindungsgemäße Verfahren von Bedeutung ist. Dem Steuergerät 10 sind die von nicht dargestellten Sensoren erfaßten Betriebsparameter wie z.B. Temperatur T, Druck p und Drehzahl n als Eingangsgrößen 11 zugeführt. Anhand der erfaßten Betriebsparameter werden im Steuergerät 10 mittels dort abgelegter Kennfelder die entsprechenden Steuergrößen z.B. für die Einspritzung und die Zündung berechnet, die dann an entsprechende Stellglieder 12 und damit an die Peripherie des Kraftfahrzeuges ausgegeben werden. In der Figur 1 ist mit dem Bezugszeichen 13 eine Bedieneinheit BE angegeben, wobei diese Bedieneinheit z.B. ein Gaspedal oder ein Bremspedal sein kann. Wird die Bedieneinheit BE von einem symbolisch angegebenen Fahrer F betätigt, so wird dies im Steuergerät 10 erkannt und die vom Fahrer gewünschte Veränderung in der Geschwindigkeit realisiert. Für den Fall, daß keine Geschwindigkeitsänderung eingeleitet wurde, wird die Geschwindigkeit des Kraftfahrzeuges, wie bereits bekannt, über einen Soll- Ist-Vergleich auf den gewünschten Wert geregelt.

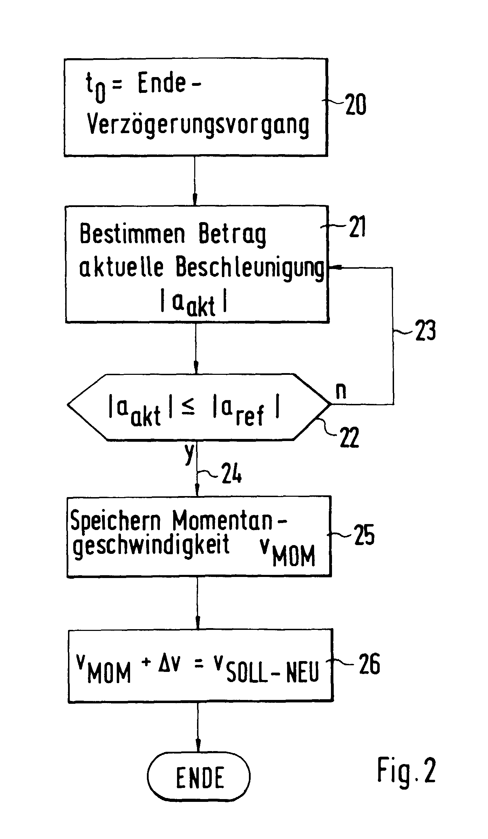

Im Folgenden soll anhand des Ablaufplanes in Figur 2 das erfindungsgemäße Verfahren nach einer vom Fahrer gewollten Verzögerung erläutert werden. In einem ersten Programmschritt 20 wird das Ende des Verzögerungsvorganges erkannt und damit ein Zeitpunkt t₀ definiert. Für das Erkennen des Verzögerungsvorganges wird überwacht, ob die Bedieneinheit BE beispielsweise das Bremspedal vom Fahrer betätigt wird. Ist der Verzögerungsvorgang beendet, wird in einem nachgeordneten Arbeitsschritt 21 der Betrag der aktuellen Beschleunigung |aₐₖₜ| ermittelt. Hierfür kann die Geschwindigkeit oder auch die Drehzahl an zwei aufeinanderfolgenden Zeitpunkten erfaßt und daraus die Beschleunigung ermittelt werden. Vorteilhafterweise wird der Betrag der aktuellen Beschleunigung |aₐₖₜ| bestimmt und im weiteren Progammablauf ausgewertet. Die Bestimmung und Auswertung des Betrages der Beschleunigung hat den Vorteil, daß dieser Berechnungsschritt sowohl bei erfolgter Verzögerung als auch bei erfolgter Beschleunigung ohne weitere Softwareanpassung durchführbar ist, wodurch sich der Softwareumfang und damit die notwendige Speicherkapazität im Steuergerät reduziert . In einer nachgeordneten Abfrage 22 wird der Betrag der aktuellen Beschleunigung |aₐₖₜ| mit dem Betrag einer vorgebbaren Referenzbeschleunigung |a_{ref}| verglichen.

Wurde die Abfrage 22 mit "Nein" beantwortet, das heißt der Betrag der aktuellen Beschleunigung |aₐₖₜ| ist größer als der Betrag der vorgebbaren Referenzbeschleunigung |a_{ref}|, so führt der Nein-Ausgang der Abfrage 22 über eine Verbindung 23 zurück an den Arbeitsschritt 21, wo wiederum der Betrag der aktuellen Beschleunigung |aₐₖₜ| ermittelt wird.

Wurde die Abfrage 22 mit "Ja" beantwortet, das heißt der Betrag der aktuellen Beschleunigung |aₐₖₜ| ist kleiner oder gleich dem Betrag der vorgebbaren Referenzbeschleunigung, |aₐₖₜ| <= |a_{ref}| so führt der Ja-Ausgang der Abfrage 22 über eine Verbindung 24 an einen Arbeitsschritt 25. Im Arbeitsschritt 25 wird die Momentangeschwindigkeit v_{Mom} zu dem Zeitpunkt, wenn |aₐₖₜ| <= |a_{ref}| erfaßt und abgespeichert, so daß im Steuergerät nunmehr die Momentangeschwindigkeit v_{Mom} vorliegt. In dem darauf folgenden Arbeitsschritt 26 wird die Momentangeschwindigkeit mit einem Geschwindigkeits-Offset beaufschlagt, wobei gilt: V_{Mon,} + Δv = v_{Soll-Neu}. Diese einzurechnende Geschwindigkeitsdifferenz kann betriebspunktabhängig beispielsweise in der Applikation festgelegt und in einem entsprechenden Kennfeld abgespeichert werden. Die neue Soll-Geschwindigkeit liegt am Ende des erfindungsgemäßen Verfahrens etwas unterhalb der eingelesenen Momentangeschwindigkeit. So wird erreicht, daß bei Bergauffahrt zu einem früheren Zeitpunkt etwas weniger korrigiert wird als in der Ebene. Die neu bestimmte Soll-Geschwindigkeit ist bis zu einer erneuten Geschwindigkeitsänderung die maßgebliche Regelgröße.

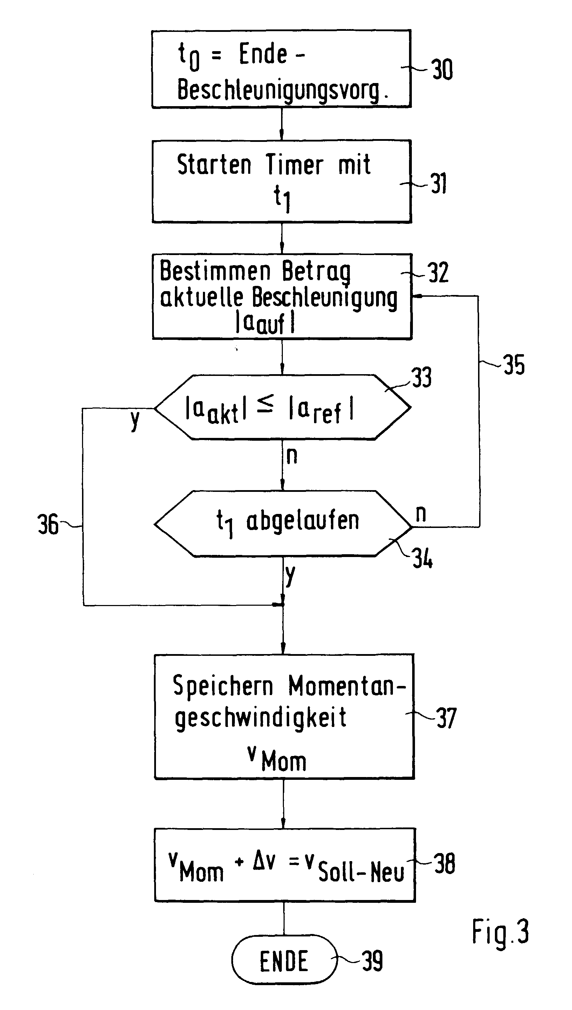

Nunmehr soll anhand des Ablaufplanes in Figur 3 das erfindungsgemäße Verfahren nach einer Beschleunigung erläutert werden. In einem Arbeitsschritt 30 wird zunächst das Ende des Beschleunigungsvorganges erfaßt und damit der Zeitpunkt t₀ definiert. Das Ende des Beschleunigungsvorganges wird analog zu den Ausführungen zu Figur 2 anhand der Überwachung der zugehörigen Bedieneinheit BE, beispielsweise des Gaspedals durchgeführt. Nach dem Ende des Beschleunigungsvorganges wird in einem anschließenden Arbeitsschritt 31 ein Timer mit einer vorgebbaren Zeit t₁ gestartet. Diese Zeit t₁ ist beispielsweise in Abhängigkeit des aktuellen Betriebszustandes, welcher durch eine Erfassung verschiedener Betriebsparameter wie Drehzahl, Last, Temperatur und Druck definiert ist, vorgebbar. Bei Beschleunigung insbesondere bei steiler Bergabfahrt kann es vorkommen, daß die positive Beschleunigung nicht unter den vorgegebenen Referenzwert absinkt. In diesem Fall wird über eine vorgebbare Zeit t1 sichergestellt, daß die Momentangeschwindigkeit auch für den Fall als neue Sollgeschwindigkeit erfaßt wird, wenn der Betrag der Beschleunigung den entsprechenden Referenzwert nicht unterschreitet, wie dies z.B. im Schubbetrieb auftreten kann.

Für das Starten einer vorgebbaren Zeit t1 gibt es verschiedene bekannte Realisierungen, die hier nicht alle detailliert erläutert werden sollen. Eine der einfachsten und gängigsten Varianten ist sicher, daß Laden eines Zählers mit dem zugehörigen Wert für t1 und das anschließende Herunterzählen, so daß bei Zählerstand Null die abgelaufene Zeit erkannt wird und die entsprechenden Aktionen ausgelöst werden. Nach Ablauf dieser vorgebbaren Zeit t₁ wird in dem nachfolgenden Arbeitsschritt 32 der Betrag der aktuellen Beschleunigung ermittelt.

Nach dem Ermitteln des Betrages der aktuellen Beschleunigung wird in einer nachgeordneten Abfrage 33 ein Vergleich des Betrages der aktuellen Beschleunigung mit dem Betrag einer vorgebbaren Referenzbeschleunigung durchgeführt. Ist der Betrag der aktuellen Beschleunigung größer ist als der Betrag der vorgebbare Referenzbeschleunigung, so führt der Nein-Ausgang der Abfrage 33 an eine nachgeordnete Abfrage 34 . Hier wird geprüft, ob die Zeit t₁ abgelaufen ist. Ist dies nicht der Fall, so führt der Nein-Ausgang der Abfrage 34 über eine Verbindung 35 zurück an den Arbeitsschritt 32. Wurde die Abfrage 23 mit "Ja" beantwortet, das heißt der Betrag der aktuellen Beschleunigung ist kleiner als der Betrag der Referenzbeschleunigung, so führt der Ja-Ausgang der Abfrage 33 über eine Verbindung 36 an einen Arbeitsschritt 37. Ebenfalls an den Arbeitsschritt 37 ist der Ja-Ausgang der Abfrage 34 geführt. In der Abfrage 34 wurde geprüft , ob die Zeit t₁ abgelaufen ist. Durch das Einfügen dieser zusätzlichen Zeitschleife werden nicht alle Bewegungen der Bedieneinheit sofort umgesetzt, was wiederum einen insgesamt ruhigeren Fahrbetrieb gewährleistet.

Im Arbeitsschritt 37 wird die Momentangeschwindigkeit erfaßt und dieser Wert an einen nachfolgenden Arbeitsschritt 28 geführt, in welchem die Momentangeschwindigkeit v_{Mom} mit einer Geschwindigkeitsdifferenz Δv beaufschlagt, wird. Dieser so ermittelte Wert ist die neue Sollgeschwindigkeit. Beim Beschleunigungsvorgang hat das Einrechnen einer betriebspunktabhängigen Geschwindigkeitsdifferenz den Vorteil, daß bei Bergauffahrten zu einem früheren Zeitpunkt etwas weniger korrigiert wird als bei Bewegung des Kraftfahrzeuges in der Ebene.
Die neu ermittelte Sollgeschwindigkeit wird nun als Regelgröße für den übergeordneten Verfahren der Geschwindigkeitsregelung verwendet. Im abschließenden Arbeitsschritt 39 ist das erfindungsgemäße Verfahren beendet. Ein erneuter Start erfolgt dann, wenn der Fahrer des Fahrzeuges einen erneuten Beschleunigungsvorgang eingeleitet hatte und dieser Vorgang durch Loslassen der entsprechenden Bedieneinheit beendet ist.

## Patentansprüche

1. Verfahren zum Regeln der Geschwindigkeit eines Kraftfahrzeuges , wobei die Fahrzeuggeschwindigkeit auf eine vorgebbare Sollgeschwindigkeit (vₛₒₗₗ) geregelt wird, wobei der Regelvorgang bei einer vom Fahrer eingeleiteten Geschwindigkeitsänderung außer Kraft gesetzt wird, wobei nach Beenden der Geschwindigkeitsänderung der Betrag der aktuellen Beschleunigung (|aₐₖₜ|) ermittelt wird, wobei der Betrag der aktuellen Beschleunigung (|aₐₖₜ|) mit dem Betrag einer vorgebbaren Referenzbeschleunigung (|aₐₖₜ| < |a_{ref}|) verglichen wird und wobei die Momentangeschwindigkeit (vₘₒₘ) zu dem Zeitpunkt, wenn der Betrag der aktuellen Beschleunigung (|aₐₖₜ|) kleiner oder gleich dem Betrag der vorgebbaren Referenzbeschleunigung (|a_{ref}|) ist, als neue Sollgeschwindigkeit (vₛₒₗₗ₋ₙₑᵤ) abgespeichert wird.

2. Verfahren nach Anspruch 1, dadurch gekennzeichnet, daß die neue Sollgeschwindigkeit (vₛₒₗₗ₋ₙₑᵤ) in Abhängigkeit von erfaßten Betriebsparametern korrigiert wird.

3. Verfahren nach Anspruch 1 und/oder 2 , dadurch gekennzeichnet, daß das Beenden der Geschwindigkeitsänderung erkannt wird, wenn das Loslassen einer Bedieneinheit (BE) für die Geschwindigkeitsänderung erkannt wird und innerhalb einer vorgebbaren Zeit keine erneute Betätigung der Bedieneinheit erfolgt.

4. Verfahren nach Anspruch 1 und 2, dadurch gekennzeichnet, nach dem Beenden der Geschwindigkeitsänderung eine vorgebbare Zeit gestartet wird und nach Ablauf dieser vorgebbaren Zeit (t₁) die Momentangeschwindigkeit (vₘₒₘ) als neue Sollgeschwindigkeit (vₛₒₗₗ₋ₙₑᵤ) erfaßt wird.

5. Verfahren nach einem der vorherigen Ansprüche, dadurch gekennzeichnet, daß die Momentangeschwindigkeit (vₘₒₘ) mit einer vorgebbaren Geschwindigkeitsdifferenz (Δ v) beaufschlagt wird und diese adaptiv korrigierte Geschwindigkeit als neue Sollgeschwindigkeit (vₛₒₗₗ₋ₙₑᵤ) gespeichert wird.
